# EUROPÄISCHE PATENTSCHRIFT

(11) **EP 3 548 765 B1**
(45) Veröffentlichungstag und Bekanntmachung des Hinweises auf die Patenterteilung: **01.05.2024**
(21) Anmeldenummer: 17825388.6
(22) Anmeldetag: 30.11.2017
(51) Int. Cl.: F16D 65/72

(54) **NUTZFAHRZEUGBREMSBACKENBETÄTIGUNGSVORRICHTUNG, EINE BREMSE UND EIN VERFAHREN ZUM HERSTELLEN ODER AUFRÜSTEN EINER NUTZFAHRZEUGBREMSBACKENBETÄTIGUNGSVORRICHTUNG**
COMMERCIAL VEHICLE BRAKE SHOE ACTUATOR, A BRAKE AND A METHOD OF MANUFACTURING OR UPGRADING A COMMERCIAL VEHICLE BRAKE SHOE ACTUATOR
DISPOSITIF D'ACTIONNEMENT DE MÂCHOIRES DE FREIN POUR VÉHICULES UTILITAIRES, UN FREIN ET UN PROCÉDÉ DE FABRICATION OU DE MISE À NIVEAU D'UN DISPOSITIF D'ACTIONNEMENT DE MÂCHOIRES DE FREIN POUR VÉHICULES UTILITAIRES

(30) Priorität: 02.12.2016 DE 102016123358
(43) Veröffentlichungstag der Anmeldung: 09.10.2019
(73) Patentinhaber: SAF-HOLLAND GmbH, 63856 Bessenbach (DE)
(72) Erfinder: HARTMANN, Mark, 63869 Heigenbrücken (DE)
(74) Vertreter: Müller Schupfner & Partner Patent- und Rechtsanwaltspartnerschaft mbB
(86) Internationale Anmeldenummer: PCT/EP2017/080990
(87) Internationale Veröffentlichungsnummer: WO 2018/100066

(56) Entgegenhaltungen:
- EP-A1- 2 338 778
- CN-U- 201 538 307
- DE-A1- 2 900 894
- DE-A1-102015 113 675
- KR-A- 20150 069 695
- US-A- 3 435 922
- US-A- 3 750 853
- US-A1- 2004 094 375
- US-A1- 2008 277 212

## Beschreibung

Die vorliegende Erfindung betrifft eine Nutzfahrzeugbremsbackenbetätigungsvorrichtung, eine Bremse und ein Verfahren zum Herstellen oder Aufrüsten einer Nutzfahrzeugbremsbackenbetätigungsvorrichtung.

Vorrichtungen zum Betätigen einer Bremse sind beispielsweise in Gestalt eines Bremssattels aus dem Stand der Technik hinlänglich bekannt. Solche Vorrichtungen dienen insbesondere dazu, eine Bremsbacke bzw. deren Bremsbelag so zu verschieben, dass sie bzw. er in einem Bremszustand mit einer Klemmkraft gegen eine drehfest mit einem Rad verbundene Scheibe gedrückt wird, während die Bremsbacke unter Ausbildung eines Lüftspiels, d. h. eines Zwischenraums zwischen der Bremsbacke und der Scheibe, einen Freilaufzustand einnimmt.

Wesentlicher Bestandteil der Betätigungsvorrichtung, insbesondere der von Nutzfahrzeugen verwendeten Betätigungsvorrichtungen, ist ein schwenkbar gelagertes Hebelelement, dessen Schwenkbewegung, die durch eine beim Betätigen aufgebrachte Eingangskraft veranlasst wird, in eine Längsbewegung übersetzt wird. Zur Übersetzung der Schwenkbewegung in eine Längsbewegung und zur anschließenden Kraftübertragung der Längsbewegung auf die Bremsbacke bzw. deren Bremsbelag sind typischerweise zahlreiche aufwendig miteinander verbundene Einzelkomponenten vorgesehen. Neben diesem komplexen Aufbau erweist es sich zudem als nachteilhaft, dass sich das Lüftspiel regelmäßig nur aufwendig ändern bzw. einstellen lässt.

Die US 3,750,853 A zeigt einen Hebel mit ein paar relativ beweglichen Elementen, welche ein Paar von Lastflächen definieren, welche teilweise eine geschlossene Kammer definieren, in welchen ein fluides Material vorhanden ist. Solch ein Hebel kann insbesondere aber nicht ausschließlich in Fahrzeugbremsen eingesetzt werden.

Die KR 2015 00 69 695 A offenbart einen elektrischen Bremssattel.

Die US 2004/009 4375 A1 befasst sich mit einem Bremssattel, welcher einen Kolben aufweist, der einen Bremsbelag kontaktiert und diesen mit einem Rotor in Kontakt bringen kann.

Die DE 10 2015 113 675 A1 und die EP 2 338 778 A1 befassen sich mit Bremssystemen für Fahrräder und/oder Motorräder.

Die US 3,435,922 offenbart eine Betätigungsvorrichtung für eine Bremse, bei der ein Hebel umgelegt wird, um Bremsbacken zu verschieben.

Die US 2008 0 277 212 A1 offenbart eine Betätigungsvorrichtung für eine Bremse mit einem Hebelelement, das in einer Lagerschale gelagert ist.

Es ist somit eine Aufgabe der vorliegenden Erfindung, eine Vorrichtung zum Betätigen einer Bremse bereitzustellen, die gegenüber den aus dem Stand der Technik bekannten Betätigungsvorrichtungen vereinfacht ausgestaltet ist und deren Lüftspiel sich einfacher einstellen lässt.

Diese Aufgabe wird gelöst durch eine Nutzfahrzeugbremsbackenbetätigungsvorrichtung gemäß Anspruch 1, durch eine Bremse gemäß Anspruch 12 und ein Verfahren zur Herstellung oder Aufrüstung einer Nutzfahrzeugbremsbackenbetätigungsvorrichtung gemäß Anspruch 13 Weitere Vorteile und Merkmale der Erfindung ergeben sich aus den Unteransprüchen sowie der Beschreibung und der beigefügten Figur.

Erfindungsgemäß ist eine Nutzfahrzeugbremsbackenbetätigungsvorrichtung für einer Bremse, insbesondere einer Scheibenbremse, erfindungsgemäß eines Nutzfahrzeugs, vorgesehen, umfassend ein schwenkbar lagerbares Hebelelement und ein längs- bzw. translatorisch beweglich lagerbares Übersetzungselement, das derart gestaltet ist, dass eine Schwenkbewegung des Hebelelements in eine Längs- bzw. translatorische Bewegung des Übersetzungselements übersetzt wird, wobei zur Kraftübertragung zwischen der Bremsbacke, insbesondere deren Belagrückenplatte, und dem Übersetzungselement eine mit einer Hydraulikflüssigkeit befüllbare hydraulische Kammer zwischen der Bremsbacke und dem Übersetzungselement anordbar ist. Gegenüber den Vorrichtungen aus dem Stand der Technik lässt sich mit der erfindungsgemäßen hydraulischen Kammer eine Kraftübertragung realisieren, mit der die Bremsbacke in ihren Bremszustand überführt werden kann. Die Ausbildung des kraftübertragenden Bauteils als hydraulische Kammer reduziert nicht nur in vorteilhafter Weise die Anzahl der zur Kraftübertragung erforderlichen Einzelbauteile, sondern es lässt sich über eine Menge an Hydraulikflüssigkeit auch das Lüftspiel einfach einstellen. Weiterhin ist es vorstellbar, dass die Vorrichtung zum Betätigen einer Bremsbacke zusammen mit der Bremsbacke in eine Bremse, insbesondere in eine Scheibenbremse, integriert ist. Insbesondere ist es vorgesehen, dass das Hebelelement und das Übersetzungselement über eine Kontaktfläche in Wirkverbindung miteinander stehen, und dass durch die Ausgestaltung der Kontaktflächen die Schwenkbewegung des Hebelelements in eine Längs- bzw. translatorische Bewegung des Übersetzungselements überführt wird. Dabei ist es vorzugsweise vorgesehen, dass das Übersetzungselement mit seiner Kontaktfläche dauerhaft am Hebelelement bzw. an einem Teil des Hebelelements anliegt. Denkbar ist ferner, dass sich die hydraulische Kammer in einer von dem Übersetzungselement zur Bremsbacke verlaufenden Kraftflussrichtung gesehen unmittelbar an das Übersetzungselement anschließt. Insbesondere ist es vorgesehen, dass das Übersetzungselement mit der hydraulischen Kammer abdichtend in Kontakt steht. So kann das Übersetzungselement als Kolben ausgebildet sein, der in der hydraulischen Kammer translatorisch verlagerbar ist. Ein weiterer Vorteil der Anordnung der hydraulischen Kammer ist, dass bereits bestehende, rein mechanisch ausgebildete Vorrichtungen durch eine einfache Integration der hydraulischen Kammer aufgerüstet werden können. Insbesondere ist es vorgesehen, dass die Vorrichtung ein schwenkbar lagerbares Hebelelement und ein längs- bzw. translatorisch bewegliches Übersetzungselement aufweist und dass in Kraftflussrichtung zwischen der Bremsbacke und dem Übersetzungselement zwischen der Bremsbacke und dem Übersetzungselement die hydraulische Kammer angeordnet ist.

Gemäß einer weiteren Ausführungsform der vorliegenden Erfindung ist vorgesehen, dass die Vorrichtung zur Ausbildung der hydraulischen Kammer einen Grundkörper und einen zum Grundkörper verschiebbar gelagertes Zylinderelement aufweist, wobei das Zylinderelement insbesondere starr mit der Bremsbacke verbunden oder verbindbar ist. Hierbei ist es vorgesehen, dass die hydraulische Kammer einen zur einen Seite hin offenen Grundkörper aufweist, über dessen Öffnung das Zylinderelement einführbar oder verlagerbar ist. Das Zylinderelement und das Übersetzungselement sind insbesondere derart voneinander getrennt oder beabstandet, daß zwischen diesen die Hydraulikflüssigkeit angeordnet ist. Vorzugsweise ragt das Zylinderelement mit einer Stirnseite in den Grundkörper hinein und steht insbesondere mit dieser Stirnseite in unmittelbaren Kontakt mit der Hydraulikflüssigkeit der hydraulischen Kammer. Zur Längsbewegung des Zylinderelements ist es vorzugsweise vorgesehen, dass der Grundkörper, insbesondere die Wandung des Grundkörpers im Bereich der Öffnung, derart ausgestaltet ist, dass das Zylinderelement durch die Wandung bei der Längsverschiebung geführt wird, d. h. die Wandung dient als Führungsschiene. Zur Stabilisierung des Zylinderelements, ist die Vorrichtung derart ausgestaltet, insbesondere dimensioniert, dass das Zylinderelement im Bremszustand den zur einen Seite hin offenen Grundkörper zumindest zu 30%, bevorzugt zumindest zu 50% und besonders bevorzugt zumindest zu 60 % füllt. Vorstellbar ist ferner, dass an einer Stirnseite des Zylinderelements, die der in den Grundkörper hineinragenden Stirnseite gegenüberliegt, die Bremsbacke angeordnet ist.

Zur Vermeidung einer thermischen Beanspruchung der Hydraulikflüssigkeit ist das Zylinderelement vorzugsweise mehrteilig ausgestaltet. Vorstellbar ist auch, dass als Material, aus dem das Zylinderelement gefertigt ist, ein solches mit einem vergleichsweise geringen Wärmeleitkoeffizient gewählt wird und/oder dass der Grundkörper derart ausgestaltet ist, dass das Übersetzungselement und das Zylinderelement höhenversetzt zueinander angeordnet sind. Ein solcher Höhenversatz erlaubt es mittels der Formgebung des Grundkörpers die Vorrichtung so auszugestalten, dass sich die Vorrichtung an bauraumbedingte Gegebenheiten anpasst. Vorzugsweise ist der Grundkörper in seiner Form individuell an einen vorhergesehenen Einsatzbereich angepasst.

Vorzugsweise ist zwischen dem Grundkörper und dem Zylinderelement ein Dichtelement angeordnet, wobei das Dichtelement insbesondere derart ausgestaltet ist, dass das Dichtelement das Zylinderelement mit einer Rückstellkraft beaufschlagt. Dadurch lässt sich mit dem Dichtelement nicht nur eine Abdichtung der hydraulischen Kammer durch das Dichtelement erzielen, sondern das Dichtelement sorgt zusätzlich für eine Rückführung des Zylinderelements von der Bremsstellung in die Freilaufstellung. Zur Erzeugung der gewünschten Rückstellkraft ist das Dichtelement entsprechend dimensioniert und angeordnet. Beispielsweise ist das Dichtelement in einem Rücksprung, der sich an der Innenseite des Grundkörpers umlaufend erstreckt, angeordnet. Vorstellbar ist dabei, dass in einer parallel zum Kraftfluss verlaufenden Richtung gesehen ein Konturverlauf des Rücksprungs derart ausgestaltet ist, dass der Konturverlauf des Rücksprungs auf einer der hydraulischen Kammer zugewandten Seite einen Winkel von im Wesentlichen 90 ° zur Innenseite des Grundkörpers ausbildet, während der Konturverlauf des Rücksprungs auf einer der hydraulischen Kammer abgewandten Seite einen Winkels von mehr als 90 ° zur Innenseite des Grundkörpers ausbildet. Mit anderen Worten ist der Rücksprung entlang einer parallel zur Kraftflussrichtung verlaufenden Richtung an seinen Seiten unterschiedlich gegenüber dem übrigen Verlauf der Innenseite des Grundkörpers geneigt. Weiterhin ist es vorgesehen, dass das Dichtelement und/oder der Rücksprung derart dimensioniert ist, dass das im Rücksprung angeordnete Dichtelement in abdichtenden Kontakt mit der Innenseite des Grundkörpers steht.

Zweckmäßigerweise ist das Zylinderelement insbesondere zur Vermeidung einer thermischen Beanspruchung der Hydraulikflüssigkeit mehrteilig ausgestaltet.

Zur Versorgung der hydraulischen Kammer mit der Hydraulikflüssigkeit ist es bevorzugt vorgesehen, dass die hydraulische Kammer über einen Verbindungsbereich mit einer Ausgleichskammer in fluider Verbindung steht. Die Ausgleichskammer bildet dabei in vorteilhafter Weise ein Reservoir, auf das bei Bedarf zurückgegriffen werden kann oder in das bei Bedarf Hydraulikflüssigkeit aus der hydraulischen Kammer eingeleitet werden kann. Im Verbindungsbereich sind Durchgangsbohrungen in der Wandung des Grundkörpers oder Verbindungskanäle vorstellbar. Denkbar ist auch, dass die Ausgleichskammer eine verschließbare Öffnung aufweist, über die die Hydraulikflüssigkeit bei Bedarf nachgefüllt werden kann oder über die die Hydraulikflüssigkeit mit einem Zusatz versetzt werden kann.

Um den Austausch zwischen der Ausgleichskammer und der hydraulischen Kammer zu steuern, ist im Verbindungsbereich ein Ventil, insbesondere ein Rückschlagventil, angeordnet. Zweckmäßigerweise ist im Verbindungsbereich ein Rückschlagventil angeordnet. Diese Rückschlagventile stellen, beispielsweise zusammen mit weiteren Durchgangsbohrungen mit Rückschlagventilen, sicher, dass bei einer Überführung des Zylinderelements aus der Position im Freilaufzustand in die Position im Bremszustand, ausreichend Hydraulikflüssigkeit aus der Ausgleichskammer gezogen werden kann und bei einer Beendigung der Krafteinwirkung auf das Hebelelement die Hydraulikflüssigkeit aus der hydraulischen Kammer wieder in die Ausgleichskammer zurückkehrt, um die Rückkehr des Zylinderelements in seine für den Freilaufzustand vorgesehene Position zu ermöglichen.

Erfindungsgemäß ist vorgesehen, dass das Übersetzungselement eine Lagerschale, in die das Hebelelement zumindest teilweise eingreift, aufweist.

Vorzugsweise ist die Lagerschale an einer Stirnseite des Übersetzungselements angeordnet, insbesondere an der der Kammer abgewandten Stirnseite. Dabei erstreckt sich die Lagerschale vorzugsweise nur teilweise über die Stirnseite entlang einer Richtung, die senkrecht zu der Richtung verläuft, entlang der das Übersetzungselement im Betrieb translatorisch bewegt wird, d. h. senkrecht zu der Kraftflussrichtung. Insbesondere nimmt ein Verhältnis zwischen einem Bereichs, in dem sich die Lagerschale entlang der Stirnseite erstreckt zu einer Gesamterstreckung der Stirnseite ein Verhältnis zwischen 0,5 und 0,8, bevorzugt zwischen 0,6 und 0,78 und besonders bevorzugt zwischen 0,65 und 0,75 an. Weiterhin ist die Lagerschale derart ausgebildet, dass in einer Richtung gesehen, entlang der die Längsbewegung des Übersetzungselements erfolgt, ein erstes Lagerschalenende gegenüber einem zweiten Lagerschalenende übersteht. Vorzugsweise ist das erste Lagerschalenende näher an einer Mittelachse, die mittig durch die Kammer verläuft und parallel zur Längsbewegung des Übersetzungselements ausgerichtet ist, angeordnet als das zweite Lagerschalenende. Insbesondere ist es vorgesehen, dass die Kraftflussrichtung, vorzugsweise ausschließlich, parallel zur Mittelachse verläuft. D. h. der Kraftfluss wird durch die Kammer nicht umgelenkt oder umgeleitet.

Hierzu ist das Hebelelement beispielsweise ortsfest, vorzugsweise an einem Chassis oder am Fahrzeugrahmen, angeordnet und bildet das Widerlager für das in Kontakt stehende System aus Hebelelement und Lagerschale. Durch die Ausformungen des Hebelelements und der Lagerschale, insbesondere der bei einer Schwenkbewegung aneinander abrollenden bzw. aneinander vorbeigleitenden Kontaktflächen des Hebelelements und der Lagerschale, wird das Übersetzungselement von der ortsfesten Schwenkachse weggedrückt. Insbesondere ist die Schwenkachse dabei auf einer Höhe mit dem Übersetzungselement angeordnet.

Vorzugsweise lässt sich ein Übersetzungsverhältnis zwischen einer auf das Hebelelement wirkenden Eingangskraft und einer von der Bremsbacke ausgehenden Klemmkraft durch die exzentrische Lagerung des Hebelelements in der Lagerschale festlegen. Hierbei ist es vorzugsweise vorgesehen, dass sich das Übersetzungsverhältnis zwischen der Eingangskraft und der Klemmkraft ausschließlich durch die exzentrische Lagerung, d. h. durch die Ausgestaltung der Konturverläufe der Lagerschale und/oder des mit der Lagerschale beim Schwenken des Hebelelements in Kontakt tretenden Hebelelements, festgelegt wird. Mit anderen Worten dient die hydraulische Kammer vorzugsweise ausschließlich zur Kraftübertragung.

Weiterhin ist es vorgesehen, dass das Hebelelement an einem Ende an einer Schwenkachse gelagert ist, wobei das an der Schwenkachse gelagerte Ende zur exzentrischen Lagerung in die Lagerschale des Übersetzungselements eingreift. Insbesondere ist das Hebelelement am an der Schwenkachse gelagerten Ende teilringförmig ausgestaltet. Dabei ist es vorstellbar, dass sich zur Ausbildung der exzentrischen Lagerung eine auf die Schwenkachse bezogene radiale Ausdehnung des Teilrings in einer durch die Schwenkbewegung vorgegebenen Umlauf- bzw. Drehrichtung ändert.

Zweckmäßig ist eine Schwenkachse, um die das Hebelelement schwenkbar gelagert ist, unterhalb der Mittelachse angeordnet. Dabei ist insbesondere unter "unterhalb" zu verstehen, dass zwischen dem Ende des Hebelelements, das an die Schwenkachse gelagert ist, und dem gegenüberliegenden Ende des Hebelelements die gedachte Mittelachse durchläuft, bzw. die gedachte Mittelachse teilt das Hebelelement in ihrer Verlängerung.

Weiterhin ist es vorgesehen, dass entlang einer Richtung, die durch die Translationsbewegung des Übersetzungselements vorgegeben ist, das Übersetzungselement zwischen der Bremsbacke und dem Hebelelement bzw. der Schwenkachse angeordnet ist. In einer parallel zur Mittelachse verlaufenden Richtung können die Schwenkachse bzw. das Hebelelement, das Übersetzungselement und die Bremsbacke hintereinander, insbesondere in dieser Reihenfolge, angeordnet sein. Dadurch lässt sich die Kraft unmittelbar auf die Bremsbache weiterleiten. Erfindungsgemäß ist es vorgesehen, dass die Kammer umlenkungsfrei ist, d. h. die Hydraulikflüssigkeit wird in der hydraulischen Kammer nicht umgelenkt.

Insbesondere wirkt das Hebelelement nur mit einem einzelnen Übersetzungselement zusammen bzw. bewirkt nur eine Bewegung einer einzelnen Bremsbacke. Beispielsweise ist die Schwenkachse positionsfest. Insbesondere ist es vorgesehen, dass durch das Hebelelement nur eine einzelne Bremsbacke ansteuerbar ist. Vorzugsweise ist es vorgesehen, dass zwischen der Bremsbacke und dem Hebelelement keine Bremsscheibe vorgesehen ist. Dadurch kann man mit Vorteil eine Kammer vermeiden, die so gestaltet ist, dass ein Fluidkanal die Bremsscheibe zumindest teilweise umgibt und entsprechend gewinkelt ist. Es kann eine vergleichsweise kompakte Vorrichtung zum Betätigen der Bremse bereitgestellt werden.

Weiterhin ist es vorgesehen, dass ein Abstand zwischen der Bremsbacke und dem Übersetzungselement einen Wert zwischen 1 cm und 15 cm, bevorzugt zwischen 2 cm und 10 cm und besonders bevorzugt zwischen 3 cm und 8 cm annimmt. Vorzugsweise umfasst die Kammer eine Innenseite, die in einer senkrecht zur Mittelachse verlaufenden Ebene einen Querschnitt aufweist. Vorzugsweise bleibt dieser Querschnitt in Form und Größe in Richtung der Mittelachse konstant.

Zweckmäßigerweise ist das der Schwenkachse abgewandte Ende des Hebelelements zur Aufnahme der Eingangskraft vorgesehen. Weiterhin ist es bevorzugt vorgesehen, dass das Ende des Hebelelements, das von der Schwenkachse abgwandt ist, zur Aufnahme der Eingangskraft vorgesehen ist. Vorzugsweise ist das von der Schwenkachse abgewandte Ende des Hebelelements dazu mit einem Kontaktbereich versehen, über den die das Hebelelement schwenkende Eingangskraft eingeleitet wird.

Ein weiterer Gegenstand der vorliegenden Erfindung ist eine Bremse, insbesondere eine Scheibenbremse, insbesondere eines Nutzfahrzeugs, mit einer erfindungsgemäßen Vorrichtung zum Betätigen einer Bremsbacke. Alle für die erfindungsgemäße Vorrichtung beschriebenen Merkmale und deren Vorteile lassen sich sinngemäß ebenfalls auf die erfindungsgemäße Bremse übertragen und andersherum.

Vorzugsweise umfasst die Bremse eine drehfest mit einem Rad verbundene Bremsscheibe, gegen die im Bremszustand die Bremsbacke, insbesondere deren Bremsbelag, mit einer Klemmkraft gedrückt wird, während die Bremsbacke, insbesondere deren Bremsbelag, in einem Freilaufzustand von der Bremsscheibe beabstandet ist. Besonders bevorzugt ist es vorgesehen, dass die Bremsscheibe in einem von zwei Bremsbacken gebildeten Spalt angeordnet ist, wobei die Bremsscheibe im Freilaufzustand im Wesentlichen um eine Achse rotiert, die parallel zur Kraftflussrichtung verläuft, die durch die Bewegung des Übersetzungselements oder des Zylinderelements vorgegeben ist.

Ferner wird die Aufgabe durch ein Verfahren zum Herstellen oder Aufrüsten einer Vorrichtung zum Betätigen einer Bremse gelöst. Alle für die erfindungsgemäße Vorrichtung zum Betätigen einer Bremse beschriebenen Merkmale und deren Vorteile lassen sich sinngemäß ebenfalls auf das erfindungsgemäße Verfahren übertragen und andersherum.

Dadurch lassen sich die Vorteile einer hydraulischen Kammer, insbesondere in Hinblick auf das Einstellen des Lüftspiels oder der Anzahl der Einzelkomponenten, in eine andernfalls rein mechanische Betätigungsvorrichtung integrieren. Dabei dient die hydraulische Kammer insbesondere ausschließlich der Kraftübertragung, während eine Eingangskraft mechanisch in die Vorrichtung über das Hebelelement eingeleitet wird. Besonders vorteilhaft ist es hierbei, dass sich die hydraulische Kammer in bereits bestehende Betätigungsvorrichtungen ohne weiteres einbauen lässt.

Hierzu wird beispielsweise ein im Grundkörper der hydraulischen Kammer gelagertes Zylinderelement mit der Bremsbacke verbunden und/oder eine Lagerschale wird zur Aufnahme eines Teils des Hebelelements ausgestaltet, indem die Lagerschale angepasst wird an die Außenseite des Teils des Hebelelement, das in die Lagerschale eingreift.

Es zeigt:

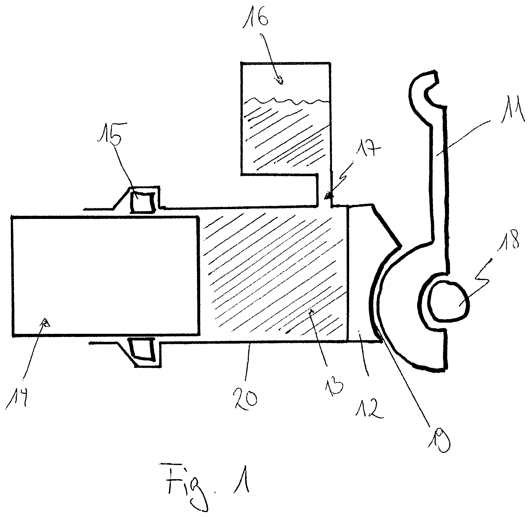

- **Fig.1:**: eine Vorrichtung zum Betätigen einer Bremsvorrichtung gemäß einer bevorzugten Ausführungsform der vorliegenden Erfindung.

In **Fig. 1** ist schematisch eine Vorrichtung 1 zum Betätigen einer Bremse vorgesehen. Insbesondere handelt es sich hierbei um eine Vorrichtung für eine Scheibenbremse, deren mit einem Rad drehfest verbundene Scheibe zum Bremsen mit einer Bremsbacke, vorzugsweise mit zwei gegenüberliegenden Bremsbacken, in Wirkverbindung gebracht wird. In einem Bremszustand wirkt dann eine von der Bremsbacke auf die Scheibe einwirkende Klemmkraft ein, während die Bremsbacke unter Ausbildung eines Zwischenraums bzw. Lüftspiels in einem Freilaufzustand von der Scheibe beabstandet ist. Wesentliches Element der Vorrichtung zum Betätigen der Bremse ist ein schwenkbar gelagertes Hebelelement 11, das zur Einnahme des Bremszustand mit einer Eingangskraft beaufschlagt wird und infolge der Beaufschlagung mit der Eingangskraft versschwenkt wird. Hierzu ist das Hebelelement 11 vorzugsweise mit einem Ende an einer Schwenkachse 18 gelagert. Um einen von der Vorrichtung 1 in Anspruch genommenen Bauraum möglichst gering zu halten, ist es vorstellbar, dass das Hebelelement 11 die Schwenkachse 18 nur teilweise, z. B. klauenhaft, umgreift. Zur Übersetzung der Schwenkbewegung des Hebelelements 11 in eine Längsbewegung der Bremsbacke ist ein mit dem Hebelelement 11, insbesondere mit dem an der Schwenkachse gelagerten Ende des Hebelelements 11, in Wirkverbindung tretendes Übersetzungselement 12 vorgesehen. Vorzugsweise umfasst das Übersetzungselement 12 eine Lagerschale 19, in der das Hebelelement 11 zumindest teilweise eingreift. Dabei sind das Hebelelement 11, insbesondere der in die Lagerschale 19 eingreifende Teil des Hebelelements 11, und/oder die Lagerschale 19 vorzugsweise so ausgestaltet, dass das Hebelelement 11 exzentrisch in der Lagerschale 19 gelagert ist. Beispielsweise wird diese exzentrische Lagerung durch entsprechende Konturverkäufe der beim Schwenken des Hebelelements 11 in Wirkverbindung tretenden Außenflächen des Hebelelements 11 und der Lagerschale 19 realisiert. Durch die exzentrische Lagerung wird bei einer Drehbewegung des in der Lageschale 19 gelagerten Teils das Übersetzungselement 12 von der Schwenkachse 18, die vorzugsweise auf Höhe des Übersetzungselements 12 ortsfest angeordnet ist, weggedrückt.

Zur Reduktion der Komplexität der zur Betätigung einer Bremse vorgesehenen Vorrichtungen 1 und zur vereinfachten Einstellung eines Lüftspiels ist es vorgesehen, dass zwischen dem Übersetzungselement 12 und der Bremsbacke eine hydraulische Kammer 13 zur Kraftübertragung auf die Bremsbacke angeordnet ist. Insbesondere ist es hierzu vorgesehen, dass das Übersetzungselement 12 die hydraulische Kammer 13 zu einen Seite hin abdichtet. Dabei ist es vorstellbar, dass das Übersetzungselement 12 längsbeweglich in der hydraulischen Kammer 13 gelagert ist oder das Übersetzungselement 12 zusammen mit der hydraulischen Kammer 13 längsbeweglich gelagert ist. Die im Betrieb mit einer Hydraulikflüssigkeit gefüllte hydraulische Kammer umfasst einen Grundkörper 20, der zur einen Seite durch das Übersetzungselement 12 begrenzt ist und auf einer gegenüberliegenden Seite durch ein im Grundkörper 20 längsbeweglich gelagertes Zylinderelement 14 begrenzt ist. Im Betrieb ist die hydraulische Kammer 13 mit der Hydraulikflüssigkeit gefüllt, die bei der Betätigung der Vorrichtung 1 komprimiert wird und eine Kraft auf das im Grundkörper 20 längsbeweglich angeordnetes Zylinderelement 14 überträgt. Hierbei sind die Längsbewegung des Übersetzungselements 12 und die Längsbewegung des Zylinderelements 14 gleichgerichtet bzw. parallel zueinander ausgerichtet. Das Zylinderelement 14 ist wiederum starr mit dem Bremsbacke (hier nicht dargestellt) verbunden. Um das Zylinderelement 14 von einem im Bremszustand eingenommenen aus dem Grundkörper 20 ausgefahrenen Zustand in einen im Freilaufzustand eingenommenen in den Grundkörper eingefahrenen Zustand rückzuführen, umfasst die Vorrichtung 1 ein Dichtelement 15. Das Dichtelement 15 ist zwischen dem Zylinderelement 14 und dem Grundkörper 20, insbesondere zwischen einer Außenseite des Zylinderelements 14 und einer Innenseite des Grundkörpers 20, angeordnet. Vorzugsweise erstreckt sich das Dichtungselement 15 umlaufend um die Außenseite des Zylinderelements 14 und ist in einem Rücksprung einer Grundkörperwandung eingelassen. Insbesondere ist das Dichtungselement 15 derart ausgestaltet, beispielsweise durch seine Form und/oder Anordnung, dass eine Rückstellkraft auf das Zylinderelement 14 veranlasst wird, wobei die Rückstellkraft für eine Rückführung des Zylinderelements 14 und damit der Bremsbacke von seiner im Bremszustand eingenommenen Position in seine im Freilaufzustand eingenommene Position sorgt. Dabei lässt sich die im Freilaufzustand eingenommene Position und damit das Lüftspiel durch einen Füllstand bzw. eine Füllmenge der Hydraulikflüssigkeit in der hydraulischen Kammer 13 steuern bzw. einstellen. Zur ausreichenden und steuerbaren Versorgung der hydraulischen Kammer 13 mit der Hydraulikflüssigkeit ist eine Ausgleichskamme 16 vorgesehen, die mit der hydraulischen Kammer 13 über einen Verbindungsbereich 17 in fluider Verbindung steht. Hierbei ist es vorzugsweise vorgesehen, dass der Verbindungsbereich 17 zur Kontrolle des Hydraulikflüssigkeitsaustauschs ein Ventil, insbesondere ein Rückschlagventil, aufweist. Dabei ist es vorstellbar, dass der Verbindungsbereich 17 als Ab- bzw. Zulauf oder als Durchgangsbohrung im Grundkörper 20 ausgestaltet ist. Ferner können mehrere weitere Durchgangsbohrungen mit Rückschlagventilen vorgesehen sein, die sicherstellen, dass bei einem Vorwärtshub bzw. einer Überführung des Zylinderelement 14 aus der im Freilaufzustand eingenommene Position in eine im Bremszustand eingenommene Position eine ausreichende Menge an Hydraulikflüssigkeit aus der Ausgleichskammer 16 gezogen werden kann und nach Beendigung der Betätigung, d. h. nach einem Aufheben der auf das Hebelelement wirkenden Eingangskraft, eine entsprechende Menge an Hydraulikflüssigkeit wieder in die Ausgleichskammer 16 entweichen kann, damit das Zylinderelement 14 die im Freilaufzustand für das Zylinderelement 14 vorgesehene Position wieder einnimmt.

### Bezugszeichenliste

- 1: Vorrichtung
- 11: Hebelelement
- 12: Übersetzungselement
- 13: hydraulische Kammer
- 14: Zylinderelement
- 15: Dichtungselement
- 16: Ausgleichskammer
- 17: Verbindungsbereich
- 18: Schwenkachse
- 19: Lagerschale

## Patentansprüche

1. Nutzfahrzeugbremsbackenbetätigungsvorrichtung (1) für einer Bremse, insbesondere eine Scheibenbremse, umfassend
ein schwenkbar lagerbares Hebelelement (11), und
ein translatorisch beweglich lagerbares Übersetzungselement (12), das derart ausgebildet ist, dass eine Schwenkbewegung des Hebelelements (11) in eine translatorische Bewegung des Übersetzungselements (12) übersetzt wird,
wobei zur Kraftübertragung zwischen der Bremsbacke und dem Übersetzungselement (12) eine mit einer Hydraulikflüssigkeit befüllte hydraulische Kammer (13) zwischen der Bremsbacke und dem Übersetzungselement (12) angeordnet ist,
wobei die Kammer (13) umlenkungsfrei ist,
**dadurch gekennzeichnet, dass**
das Übersetzungselement (12) eine Lagerschale (19), in die das Hebelelement (11) zumindest teilweise eingreift, aufweist.

2. Nutzfahrzeugbremsbackenbetätigungsvorrichtung (1) gemäß Anspruch 1, wobei die Nutzfahrzeugbremsbackenbetätigungsvorrichtung (1) zur Ausbildung der hydraulischen Kammer (13) einen Grundkörper (20) und einen zum Grundkörper (20) verschiebbar gelagertes Zylinderelement (14) aufweist, wobei das Zylinderelement (14) insbesondere starr mit der Bremsbacke verbindbar ist.

3. Nutzfahrzeugbremsbackenbetätigungsvorrichtung (1) gemäß Anspruch 2, wobei zwischen dem Grundkörper (20) und dem Zylinderelement (14) ein Dichtelement (15) angeordnet ist, wobei das Dichtelement (15) insbesondere derart ausgestaltet ist, dass das Dichtelement (15) das Zylinderelement (14) mit einer Rückstellkraft beaufschlagt.

4. Nutzfahrzeugbremsbackenbetätigungsvorrichtung (1) gemäß Anspruch 3, wobei das Dichtelement (15) derart ausgestaltet ist, dass das Zylinderelement (14) mit einer Rückstellkraft beaufschlagt wird.

5. Nutzfahrzeugbremsbackenbetätigungsvorrichtung (1) gemäß einem der Ansprüche 2 bis 4, wobei zur Vermeidung einer thermischen Beanspruchung der Hydraulikflüssigkeit das Zylinderelement (14) mehrteilig ausgestaltet ist.

6. Nutzfahrzeugbremsbackenbetätigungsvorrichtung (1) gemäß einem der vorhergehenden Ansprüche, wobei die hydraulische Kammer (13) zur Versorgung mit Hydraulikflüssigkeit über einen Verbindungsbereich (17) mit einer Ausgleichskammer (16) in fluider Verbindung steht.

7. Nutzfahrzeugbremsbackenbetätigungsvorrichtung (1) gemäß Anspruch 6, wobei im Verbindungsbereich (17) ein Rückschlagventil angeordnet ist

8. Nutzfahrzeugbremsbackenbetätigungsvorrichtung (1) gemäß Anspruch 6, wobei die Lagerschale (19) und/oder das Hebelelement (11) zueinander exzentrisch gelagert sind.

9. Nutzfahrzeugbremsbackenbetätigungsvorrichtung (1) gemäß Anspruch 7, wobei die Vorrichtung derart gestaltet ist, dass eine Übersetzungsverhältnis zwischen einer auf das Hebelelement (11) wirkenden Eingangskraft und einer von der Bremsbacke ausgehenden Klemmkraft durch die exzentrische Lagerung des Hebelelements (11) in der Lagerschale (19) festgelegt wird.

10. Nutzfahrzeugbremsbackenbetätigungsvorrichtung (1) gemäß einem der vorhergehenden Ansprüche, wobei das Hebelelement (11) an einem Ende an einer Schwenkachse (18) gelagert ist, wobei das an der Schenkachse (18) gelagerte Ende zur exzentrischen Lagerung in die Lagerschale (19) des Übersetzungselements (12) eingreift.

11. Nutzfahrzeugbremsbackenbetätigungsvorrichtung (1) gemäß Anspruch 8, wobei das der Schwenkachse (18) abgewandte Ende des Hebelelements (11) zur Aufnahme der Eingangskraft vorgesehen ist.

12. Bremse, insbesondere Scheibenbremse, mit einer Nutzfahrzeugbremsbackenbetätigungsvorrichtung (1) gemäß einem der vorhergehenden Ansprüche.

13. Verfahren zur Herstellung oder zum Aufrüsten einer Nutzfahrzeugbremse, insbesondere einer Scheibenbremse, wobei zwischen einem Hebelelement (11) und einer Bremsbacke eine mit Hydraulikflüssigkeit befüllte hydraulische Kammer (13) realisiert wird,
wobei ein translatorisch beweglich lagerbares Übersetzungselement (12), das derart ausgebildet ist, dass eine Schwenkbewegung des Hebelelements (11) in eine translatorische Bewegung des Übersetzungselements (12) übersetzt wird, realisiert wird,
wobei die Kammer (13) umlenkungsfrei ist,
- **dadurch gekennzeichnet, dass**
das Übersetzungselement (12) eine Lagerschale (19), in die das Hebelelement (11) zumindest teilweise eingreift, aufweist.

14. Verfahren gemäß Anspruch 13, wobei ein im Grundkörper (20) gelagertes Zylinderelement (14) mit der Bremsbacke verbunden wird und/oder eine Lagerschale (19) zur Aufnahme eines Teils des Hebelelements (11) ausgestaltet wird.

## Claims

1. Commercial vehicle brake shoe actuating device (1) for a brake, in particular a disc brake, comprising
a pivotably mountable lever element (11), and
a translationally movable transmission element (12) which is designed in such a way that a swivelling movement of the lever element (11) is translated into a translational movement of the transmission element (12),
wherein a hydraulic chamber (13) filled with a hydraulic fluid is arranged between the brake shoe and the transmission element (12) for the transmission of force between the brake shoe and the transmission element (12),
wherein the chamber (13) is deflection-free,
**characterised in that**
the transmission element (12) has a bearing shell (19) in which the lever element (11) engages at least partially.

2. Commercial vehicle brake shoe actuating device (1) according to claim 1,
wherein the commercial vehicle brake shoe actuating device (1) for forming the hydraulic chamber (13) has a base body (20) and a cylinder element (14) mounted displaceably relative to the base body (20), wherein the cylinder element (14) can be connected in particular rigidly to the brake shoe.

3. Commercial vehicle brake shoe actuating device (1) according to claim 2,
wherein a sealing element (15) is arranged between the base body (20) and the cylinder element (14), wherein the sealing element (15) is designed in particular in such a way that the sealing element (15) acts on the cylinder element (14) with a restoring force.

4. Commercial vehicle brake shoe actuating device (1) according to claim 3, wherein the sealing element (15) is designed such that a restoring force is applied to the cylinder element (14).

5. Commercial vehicle brake shoe actuating device (1) according to one of claims 2 to 4, wherein the cylinder element (14) is designed in several parts in order to avoid thermal stress on the hydraulic fluid.

6. A commercial vehicle brake shoe actuator (1) according to any one of the preceding claims, wherein the hydraulic chamber (13) for supplying hydraulic fluid is in fluid communication with an equalising chamber (16) via a connecting region (17).

7. Commercial vehicle brake shoe actuating device (1) according to claim 6, wherein a non-return valve is arranged in the connection region (17)

8. Commercial vehicle brake shoe actuating device (1) according to claim 6, wherein the bearing shell (19) and/or the lever element (11) are mounted eccentrically relative to one another.

9. Commercial vehicle brake shoe actuating device (1) according to claim 7, wherein the device is designed such that a transmission ratio between an input force acting on the lever element (11) and a clamping force emanating from the brake shoe is determined by the eccentric mounting of the lever element (11) in the bearing shell (19).

10. Commercial vehicle brake shoe actuating device (1) according to one of the preceding claims, wherein the lever element (11) is mounted at one end on a pivot axis (18), wherein the end mounted on the pivot axis (18) engages in the bearing shell (19) of the transmission element (12) for eccentric mounting.

11. Commercial vehicle brake shoe actuating device (1) according to claim 8,
wherein the end of the lever element (11) facing away from the pivot axis (18) is provided for receiving the input force.

12. Brake, in particular disc brake, with a commercial vehicle brake shoe actuating device (1) according to one of the preceding claims.

13. Method for producing or upgrading a commercial vehicle brake, in particular a disc brake, wherein a hydraulic chamber (13) filled with hydraulic fluid is realised between a lever element (11) and a brake shoe,
wherein a translationally movable transmission element (12) is realised, which is designed in such a way that a pivoting movement of the lever element (11) is translated into a translational movement of the transmission element (12),
wherein the chamber (13) is deflection-free,
**characterised in that**
the transmission element (12) has a bearing shell (19) in which the lever element (11) engages at least partially.

14. Method according to claim 13, wherein a cylinder element (14) mounted in
the base body (20) is connected to the brake shoe and/or a bearing shell (19) is designed to receive a part of the lever element (11).

## Revendications

1. Dispositif d'actionnement de mâchoire de frein de véhicule utilitaire (1) pour un frein, en particulier un frein à disque, comprenant
un élément de levier (11) susceptible d'être monté de manière pivotante, et
un élément de transmission (12) susceptible d'être monté mobile en translation, qui est conçu de telle sorte qu'un mouvement de pivotement de l'élément de levier (11) est transmis en un mouvement de translation de l'élément de transmission (12),
dans lequel
une chambre hydraulique (13) susceptible d'être remplie d'un liquide hydraulique est disposée entre la mâchoire de frein et l'élément de transmission (12) pour la transmission de force entre la mâchoire de frein et l'élément de transmission (12),
la chambre (13) est exempte de déviation,
**caractérisé en ce que** l'élément de transmission (12) comprend une coquille de coussinet (19) dans laquelle l'élément de levier (11) s'engage au moins partiellement.

2. Dispositif d'actionnement de mâchoire de frein de véhicule utilitaire (1) selon la revendication 1,
dans lequel, pour former la chambre hydraulique (13), le dispositif d'actionnement de mâchoire de frein de véhicule utilitaire (1) comporte un corps de base (20) et un élément de cylindre (14) monté coulissant par rapport au corps de base (20), l'élément de cylindre (14) pouvant être relié en particulier rigidement à la mâchoire de frein.

3. Dispositif d'actionnement de mâchoire de frein de véhicule utilitaire (1) selon la revendication 2,
dans lequel un élément d'étanchéité (15) est disposé entre le corps de base (20) et l'élément de cylindre (14), l'élément d'étanchéité (15) étant en particulier configuré de telle sorte que l'élément d'étanchéité (15) sollicite l'élément de cylindre (14) par une force de rappel.

4. Dispositif d'actionnement de mâchoire de frein de véhicule utilitaire (1) selon la revendication 3,
dans lequel l'élément d'étanchéité (15) est configuré de telle sorte que l'élément de cylindre (14) est sollicité par une force de rappel.

5. Dispositif d'actionnement de mâchoire de frein de véhicule utilitaire (1) selon l'une des revendications 2 à 4,
dans lequel, pour éviter une contrainte thermique du liquide hydraulique, l'élément de cylindre (14) est réalisé en plusieurs parties.

6. Dispositif d'actionnement de mâchoire de frein de véhicule utilitaire (1) selon l'une des revendications précédentes,
dans lequel, pour l'alimentation en liquide hydraulique, la chambre hydraulique (13) est en communication fluidique avec une chambre de compensation (16) par l'intermédiaire d'une zone de communication (17).

7. Dispositif d'actionnement de mâchoire de frein de véhicule utilitaire (1) selon la revendication 6,
dans lequel un clapet anti-retour est disposé dans la zone de communication (17).

8. Dispositif d'actionnement de mâchoire de frein de véhicule utilitaire (1) selon la revendication 6,
dans lequel la coquille de coussinet (19) et/ou l'élément de levier (11) sont montés de manière excentrée l'un par rapport à l'autre.

9. Dispositif d'actionnement de mâchoire de frein de véhicule utilitaire (1) selon la revendication 7,
dans lequel le dispositif est conçu de telle sorte qu'un rapport de transmission entre une force d'entrée agissant sur l'élément de levier (11) et une force de serrage émanant de la mâchoire de frein est défini par le montage excentré de l'élément de levier (11) dans la coquille de coussinet (19).

10. Dispositif d'actionnement de mâchoire de frein de véhicule utilitaire (1) selon l'une des revendications précédentes,
dans lequel l'élément de levier (11) est monté, à une extrémité, sur un axe de pivotement (18), l'extrémité montée sur l'axe de pivotement (18) s'engageant dans la coquille de coussinet (19) de l'élément de transmission (12) pour le montage excentré.

11. Dispositif d'actionnement de mâchoire de frein de véhicule utilitaire (1) selon la revendication 8,
dans lequel l'extrémité de l'élément de levier (11) détournée de l'axe de pivotement (18) est prévue pour recevoir la force d'entrée.

12. Frein, en particulier frein à disque, comportant un dispositif d'actionnement de mâchoire de frein de véhicule utilitaire (1) selon l'une des revendications précédentes.

13. Procédé de fabrication ou d'équipement d'un frein de véhicule utilitaire, en particulier d'un frein à disque, dans lequel
une chambre hydraulique (13) susceptible d'être remplie d'un liquide hydraulique est réalisée entre un élément de levier (11) et une mâchoire de frein,
il est prévu un élément de transmission (12) susceptible d'être monté mobile en translation, qui est conçu de telle sorte qu'un mouvement de pivotement de l'élément de levier (11) est transmis en un mouvement de translation de l'élément de transmission (12),
la chambre (13) est exempte de déviation,
**caractérisé en ce que**
l'élément de transmission (12) comprend une coquille de coussinet (19) dans laquelle l'élément de levier (11) s'engage au moins partiellement.

14. Procédé selon la revendication 13,
dans lequel un élément de cylindre (14), monté dans le corps de base (20), est relié à la mâchoire de frein, et/ou une coquille de coussinet (19) est prévue pour recevoir une partie de l'élément de levier (11).
